# EUROPÄISCHE PATENTANMELDUNG

(11) **EP 2 713 121 A2**
(43) Veröffentlichungstag der Anmeldung: **02.04.2014**
(21) Anmeldenummer: 13184424.3
(22) Anmeldetag: 13.09.2013
(51) Int. Cl.: F25D 16/00, F25D 11/00

(54) **Kühleinrichtung für zeitweise stromlosen Kühlbetrieb**

(30) Priorität: 27.09.2012 DE 202012103720 U
(71) Anmelder: Viessmann Kältetechnik GmbH, 95030 Hof / Saale (DE)
(72) Erfinder: Gebelein, Bernd, 95179 Geroldsgrün (DE); Römer, Dr. Ing., Siegfried, 01477 Arnsdorf (DE)
(74) Vertreter: Pröll, Jürgen

(57) **Zusammenfassung**

Die vorliegende Erfindung betrifft eine Kühleinrichtung für einen begehbaren Raum, aufweisend einen ersten Verdampfer und einen thermischen Zwischenspeicher (10) mit einem zweiten Verdampfer (16; 32), wobei der erste Verdampfer mit dem thermischen Zwischenspeicher (10) und der thermische Zwischenspeicher (10) mit dem zweiten Verdampfer (16; 32) verbunden sind. Der erste Verdampfer und der thermische Zwischenspeicher (10) sind über dem begehbaren Raum und der zweite Verdampfer (16; 32) in dem begehbaren Raum angeordnet, wobei der erste Verdampfer und der thermische Zwischenspeicher (10) über dem zweiten Verdampfer (16; 32) angeordnet sind, so dass das erste Kühlmittel (18) schwerkraftbedingt zu dem zweiten Verdampfer (16; 32) strömen und das in dem zweiten Verdampfer (16; 32) verdampfte erste Kühlmittel (18) zu dem thermischen Zwischenspeicher (10) zurückströmen kann.

## Beschreibung

Die vorliegende Erfindung betrifft eine Kühleinrichtung für einen zeitweise stromlosen Kühlbetrieb für einen zu kühlenden, begehbaren Raum, aufweisend eine Kältemaschine zum Kühlen eines Kühlmittels mit einem ersten Verdampfer zum Verdampfen eines Kühlmittels und einen thermischen Zwischenspeicher mit einem zweiten Verdampfer zum Verdampfen eines Kühlmittels.

Aus dem Stand der Technik ist es beispielsweise bekannt, bei Kühlschränken oder anderen Kühleinrichtungen, wenn Temperaturen in Anlagenteilen dieser Geräte bestimmte Grenzwerte überschreiten, die entsprechenden Anlagenteile auszuschalten und/oder eine Kühlung dieser vorzunehmen. Dazu sind Messeinrichtungen und Sensoren sowie bestimmte Steuerungen vorgesehen.

Aus der DE 10 2010 030 619 A1 ist beispielsweise ein Kältegerät mit einem Kältespeicher bekannt, wobei in dem Kältespeicher gekühltes Kältemittel bevorratet ist. Ferner ist eine Ventilanordnung zum Zuführen des gekühlten Kältemittels zu einem Kältemittelkreislauf vorgesehen, wobei die Zuführung des Kältemittels in Abhängigkeit von einem Energiekriterium erfolgt. Die Anordnung der DE 10 2010 030 619 A1 benötigt einen Kompressor, welcher das Kältemittel umwälzt. Das darin beschriebene Kältegerät eignet sich besonders für kleine Geräte, wie z. B. Kühlschränke, und kann deshalb auch nur für eine bestimmte Ausfalldauer eine Kühlung bereitstellen. Ein entscheidender Nachteil liegt darin, dass, um das Kältemittel umzuwälzen, der Kompressor benötigt wird, weswegen ein rein stromloser Betrieb nur solange aufrechterhalten werden kann, bis das gesamte Kältemittel aus dem Kältespeicher abgeführt worden ist.

Der Erfindung liegt daher die Aufgabe zu Grunde, eine Kühleinrichtung für einen zeitweise stromlosen Kühlbetrieb für einen zu kühlenden, begehbaren Raum anzugeben, bei welcher über einen längeren Zeitraum eine Kühlung ganz ohne die Zufuhr von elektrischer Energie erfolgen kann.

Die Aufgabe der Erfindung wird durch eine Kühleinrichtung mit den in Anspruch 1 angegebenen Merkmalen gelöst. Vorteilhafte Weiterbildungen sind in den Unteransprüchen im Detail angegeben.

Die erfindungsgemäße Kühleinrichtung für einen zeitweise stromlosen Kühlbetrieb für einen zu kühlenden, begehbaren Raum, in dem die Kühleinrichtung geräuscharm und/oder in einem Notbetrieb betrieben werden kann, weist eine Kältemaschine zum Kühlen eines Kühlmittels mit einem ersten Verdampfer zum Verdampfen eines Kühlmittels und einen thermischen Zwischenspeicher sowie einen zweiten Verdampfer zum Verdampfen eines Kühlmittels auf, wobei
- der erste Verdampfer der Kältemaschine über ein erstes Leitungssystem mit dem thermischen Zwischenspeicher und der thermische Zwischenspeicher über ein zweites von dem ersten Leitungssystem getrenntes Leitungssystem mit dem zweiten Verdampfer verbunden ist,
- ein erstes Kühlmittel von der Kältemaschine gekühlt wird und über das erste Leitungssystem dem Zwischenspeicher zuführbar ist, wobei das erste Kühlmittel über eine Leitung des zweiten Leitungssystems dem zweiten Verdampfer zuführbar ist und das in dem zweiten Verdampfer verdampfte erste Kühlmittel über eine weitere Leitung des zweiten Leitungssystems dem Zwischenspeicher zuführbar ist,
- der erste Verdampfer des ersten Leitungssystems und der thermische Zwischenspeicher über dem zu kühlenden, begehbaren Raum und der zweite Verdampfer in dem zu kühlenden, begehbaren Raum angeordnet sind, wobei der erste Verdampfer des ersten Leitungssystems und der thermische Zwischenspeicher über dem zweiten Verdampfer angeordnet sind, so dass das erste Kühlmittel in der Leitung des zweiten Leitungssystems schwerkraftbedingt zu dem zweiten Verdampfer strömen und das in dem zweiten Verdampfer verdampfte erste Kühlmittel über die Leitung des zweiten Leitungssystems zu dem thermischen Zwischenspeicher zurückströmen kann, wobei in der Leitung des zweiten Leitungssystems zum zweiten Verdampfer ein Ventil angeordnet ist, über welches die Menge des ersten Kühlmittels, das zu dem zweiten Verdampfer strömt, einstellbar ist.

Bei der Kühleinrichtung wird beispielsweise in einem normalen Betrieb das erste Kühlmittel gekühlt. Im Falle eines Stromausfalls erfolgt dann eine weitere Kühlung des begehbaren Raums, da das erste Kühlmittel aus dem thermischen Zwischenspeicher über das Ventil zu dem zweiten Verdampfer schwerkraftbedingt nach unten fließt, wobei das erste Kühlmittel in dem zweiten Verdampfer verdampft und das verdampfte erste Kühlmittel über die Leitung des zweiten Leitungssystems zu dem thermischen Zwischenspeicher in den thermischen Zwischenspeicher zurückströmt. Durch die Anordnung des thermischen Zwischenspeichers über dem zweiten Verdampfer, beispielsweise auf dem Dach des begehbaren Raumes, wird also eine weitere Umwälzung des ersten Kühlmittels auch dann bereitgestellt, wenn keine Pumpen aufgrund eines Stromausfalls mehr betätigt werden können.

Das erste Leitungssystem kann auch in sich geschlossen sein und bildet einen separaten Kreislauf, in dem das erste Kühlmittel zirkuliert. Im zweiten Leitungssystem zirkuliert ein zweites Kühlmittel von dem thermischen Speicher zu dem zweiten Verdampfer.

Über das erste Kühlmittel wird das in dem thermischen Zwischenspeicher aufgenommene zweite Kühlmittel gekühlt. Zur Kühlung des in dem thermischen Zwischenspeicher aufgenommenen zweiten Kühlmittels weist das erste Leitungssystem eine Vielzahl von Windungen innerhalb des thermischen Zwischenspeichers auf.

Das zweite Leitungssystem kann ebenso in sich geschlossen sein und einen separaten Kreislauf für das zweite Kühlmittel bilden, welches von dem thermischen Zwischenspeicher zu dem zweiten Verdampfer und von dem zweiten Verdampfer zu dem thermischen Zwischenspeicher strömt, wobei in dem thermischen Zwischenspeicher ein Speichermedium aufgenommen ist und ein Teil des zweiten Leitungssystems innerhalb des thermischen Zwischenspeichers verläuft. Das in dem thermischen Zwischenspeicher aufgenommene Speichermedium dient zum Speichern thermischer Energie und zum Kühlen des zweiten Kühlmittels. Das Speichermedium wird ferner von dem ersten Kühlmittel über das erste Leitungssystem gekühlt.

Das erste und das zweite Leitungssystem können in dem thermischen Zwischenspeicher im Wesentlichen aneinander verlaufen, wobei die Strömungsrichtung des zweiten Kühlmittels und die Strömungsrichtung des ersten Kühlmittels so eingestellt sind, dass die Strömungsrichtung des ersten Kühlmittels entgegen der Strömungsrichtung des zweiten Kühlmittels verläuft. Ein so genanntes Gegenstromkühlen bietet zudem den Vorteil, dass eine schnellere Kühlung erzielt wird.

Das Ventil in der Leitung des zweiten Leitungssystems zu dem zweiten Verdampfer kann im nicht betätigten Zustand geöffnet sein. Dadurch ist sichergestellt, dass im Falle eines Stromausfalls ausreichend Kühlmittel zu dem zweiten Verdampfer strömt, um den zu kühlenden Raum zu kühlen. Ventile oder Ventilanordnungen, die ein Öffnen im unbetätigten Zustand bereitstellen, sind aus dem Stand der Technik bekannt. Je nach Anwendungsgebiet und Ausgestaltung der Kühleinrichtung bzw. des thermischen Zwischenspeichers kann ein speziell dafür geeignetes Ventil verwendet werden.

Darüber hinaus kann der thermische Zwischenspeicher gegenüber seiner Umgebung hermetisch isoliert sein. Dadurch erfolgt im Wesentlichen keine Beeinflussung der Temperatur der Kühlmittel und/oder des Speichermediums in dem thermischen Zwischenspeicher durch die Umgebungstemperaturen.

In weiteren Ausführungen ist das Speichermedium ein Phasenwechselmaterial. Bei einem Phasenwechselmaterial kann in einem bestimmten Volumen ein hohes Maß an thermischer Energie, beispielsweise 4 kWh bis 50 kWh oder mehr für einen durchschnittlichen, begehbaren Kühlraum, gespeichert werden. Die hohe Energiespeicherdichte von Phasenwechselmaterial wirkt sich vorteilhaft auf die Baugröße des thermischen Zwischenspeichers sowie auf die Baugröße und Abmessungen der Anlage aus.

Der zweite Verdampfer kann in weiteren Ausführungen als Flächenverdampfer ausgebildet sein, wobei darüber hinaus der Flächenverdampfer eine Vielzahl von Traversen und einen Einlassanschluss für flüssiges Kühlmittel aufweist, wobei die Traversen schräg von einer Seite des Flächenverdampfers zu der gegenüberliegenden Seite des Flächenverdampfers verlaufen und wobei die Traversen an ihren unteren Endabschnitten so ausgebildet sind, dass sie einen Überlauf für das in dem Flächenverdampfer einströmende und die Traversen herabströmende Kühlmittel aufweisen, wobei die Abstände der Traversen zueinander und zu den Wänden des Flächenverdampfers so groß sind, dass verdampftes Kühlmittel zu einem Auslassanschluss strömen kann. Ein so ausgebildeter Flächenverdampfer bietet den Vorteil, dass das Kühlmittel langsam herunterlaufen kann und die Flächen des Flächenverdampfers optimal ausgenutzt werden. Der Flächenverdampfer weist dabei auch eine große Wärmeübertragungsfläche für das zu verdampfende Kühlmittel auf.

Weiterhin kann das Phasenwechselmaterial ein Gemisch aus Wasser und Salzen oder Alkoholen mit oder ohne weiteren Zusätzen sein. Dadurch ist es möglich, die Gemischkonzentration und/oder die Gemischzusammensetzung so zu wählen, dass für verschiedene Bedürfnisse und Anwendungsfälle ein geeignetes Speichermedium/Phasenwechselmaterial zur Verfügung steht. Ferner können mit einfachen Mitteln ohne größere Umbauten oder Änderungen in der Steuerung bestimmte Speichertemperaturen realisiert werden. Dadurch sind darüber hinaus ein leichter Austausch und eine leichte Anpassbarkeit gegeben, wobei diese Gemischkonzentrationen darüber hinaus auch einem so genannten Degradieren von Zellen eines Speichers entgegenwirken. Bei herkömmlichen Speichern tritt oftmals das Problem auf, dass nicht mehr genügend Kristallisationskeime vorhanden sind, was zu einem undefinierten Erstarren bei der Umschlagstemperatur des Phasenwechselmaterials führt. Die Kristallisation wird gehemmt und insofern kann der Speicher der Kühleinrichtung nicht mehr seine volle Kühlleistung bereitstellen. Bei einer Gemischzusammensetzung mit verschiedenen Gemischkonzentrationen schmelzen die PCM-Substanzen zu leicht unterschiedlichen Temperaturen (Phasenwechsel von fest zu flüssig), wobei die Gemischzusammensetzung durch die natürliche Osmose zirkuliert und dieser thermische Zwischenspeicher dann ohne Rühren oder Ähnliches ein relativ homogenes Speichermedium bereitstellt. Es muss daher keine Durchmischung stattfinden und die Kristallisationskeime sind in dem Speichermedium verteilt, wodurch die Reduzierung der Speicherfähigkeit mit zunehmender Zyklenzahl vermindert wird.

Dabei kann die Konzentration der Gemische aus Wasser und Salzen oder Alkoholen über weitere Mittel einstellbar und/oder veränderbar sein.

Darüber hinaus können die Teile des ersten und/oder des zweiten Leitungssystems, die innerhalb des thermischen Zwischenspeichers verlaufen, schrauben- oder mäanderförmig ausgebildet sein und entlang der Wand des thermischen Zwischenspeichers verlaufen. Bei einer schraubenförmigen Ausgestaltung zumindest eines Leitungssystems innerhalb des thermischen Zwischenspeichers kann dieses Leitungssystem ein anderes umgeben.

Der in dem thermischen Zwischenspeicher angeordnete Teil des ersten und der in dem thermischen Zwischenspeicher angeordnete Teil des zweiten Leitungssystems können auch aneinander liegend verlaufen.

In einer weiteren Ausgestaltung ist vorgesehen, dass in dem ersten und in dem zweiten Leitungssystem Umschaltmittel angeordnet sind, die einen direkten Fluss des Kühlmittels von der Kältemaschine zu dem zweiten Verdampfer bereitstellen. Wenn zum Beispiel der thermische Zwischenspeicher vollständig geladen ist (beispielsweise wenn das Speichermedium vollständig erstarrt ist und in der festen Phase vorliegt), so kann über die Kältemaschine direkt ein Kühlmittel (z. B. erstes Kühlmittel) zu dem zweiten Verdampfer zum Kühlen des begehbaren, zu kühlenden Raums geführt werden.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren dargestellten Komponenten sind hierbei nicht maßstäblich; sie können bei zu implementierenden Ausführungsformen vom Veranschaulichten abweichen.

In den Zeichnungen zeigen:
- Fig. 1: eine schematische Ansicht eines thermischen Zwischenspeichers und eines Verdampfers;
- Fig. 2: eine schematische Ansicht eines weiteren thermischen Zwischenspeichers und eines Verdampfers;
- Fig. 3: eine schematische Ansicht eines weiteren thermischen Zwischenspeichers und eines Verdampfers; und
- Fig. 4: eine schematische Ansicht eines Flächenverdampfers.

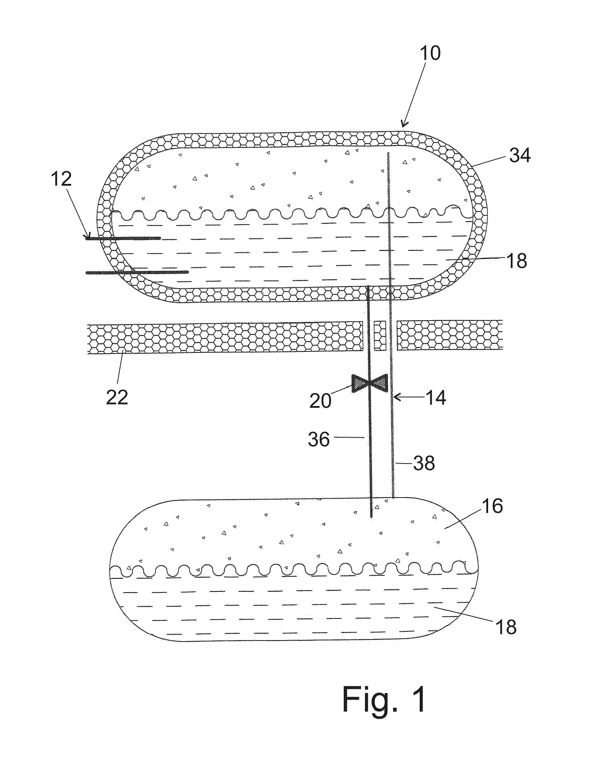

Fig. 1 zeigt eine schematische Ansicht eines thermischen Zwischenspeichers 10, der über einen begehbaren Raum angeordnet ist. Dazu ist der thermische Zwischenspeicher 10 über der Decke 22 des begehbaren Raums angeordnet. Die Decke 22 weist Öffnungen für das zweite Leitungssystem 14 auf, welches mit einem zweiten Verdampfer 16 verbunden ist. Das zweite Leitungssystem 14 ist zudem mit dem thermischen Zwischenspeicher 10 verbunden. Darüber hinaus ist der thermische Zwischenspeicher 10 mit einem ersten Leitungssystem 12 verbunden, welches mit einer in den Figuren nicht dargestellten Kältemaschine zum Kühlen eines in dem thermischen Zwischenspeicher 10 und in dem zweiten Verdampfer 16 befindlichen Kühlmittels 18 verbunden ist.

Der thermische Zwischenspeicher 10 ist gegenüber seiner Umgebung isoliert und weist daher eine entsprechend ausgebildete Wand 34 auf. Über das erste Leitungssystem 12 wird das erste Kühlmittel 18 gekühlt und in den thermischen Zwischenspeicher 10 gebracht. Dabei erfolgt ein Umwälzen des ersten Kühlmittels 18 von der Kältemaschine über das erste Leitungssystem zu dem thermischen Zwischenspeicher 10. Ferner erfolgt ein Umwälzen des ersten Kühlmittels 18 über das zweite Leitungssystem 14 von dem thermischen Zwischenspeicher 10 zu dem zweiten Verdampfer 16. Über die Zuführleitung 36 des zweiten Leitungssystems 14 kann das erste Kühlmittel 18 zu dem Verdampfer 16 strömen. In dem Verdampfer 16 verdampft das erste Kühlmittel 18 und nimmt dadurch Wärme über den Verdampfer 16 vom zu kühlenden Raum auf. Das in dem zweiten Verdampfer 16 verdampfte erste Kühlmittel 18 strömt dann über die Abführleitung 38 gasförmig zurück zu dem thermischen Zwischenspeicher 10. In der Zuführleitung 36 vom thermischen Zwischenspeicher 10 zu dem zweiten Verdampfer 16 ist ein Ventil 20 angeordnet. Das Ventil 20 kann elektrisch oder mechanisch betätig werden. Jedoch ist das Ventil 20 so ausgebildet, dass bei einem Stromausfall das Ventil 20 zumindest die Zuführleitung 36 soweit öffnet bzw. geöffnet ist oder bleibt, dass das erste Kühlmittel 18 bzw. eine bestimmte Menge des ersten Kühlmittels 18 zu dem zweiten Verdampfer 16 strömen kann.

Die Decke 22 des zu kühlenden Raums sowie die weiteren Wände des Raums sind ebenso wie die Wand 34 des thermischen Zwischenspeichers 10 thermisch isoliert.

Im Betrieb wird das erste Kühlmittel 18 von der Kältemaschine gekühlt und über den thermischen Zwischenspeicher 10 zu dem zweiten Verdampfer 16 geführt. In dem zweiten Verdampfer 16 verdampft das erste Kühlmittel 18 und nimmt dadurch Wärme aus dem zu kühlenden Raum auf. Tritt nun ein Stromausfall auf, so wird dennoch der Raum weitergekühlt, da das in dem thermischen Zwischenspeicher 10 befindliche erste Kühlmittel 18 über das geöffnete Ventil 20 in der Zuführleitung 36 zu dem zweiten Verdampfer 16 strömen kann. Das erste Kühlmittel 18 verdampft in dem zweiten Verdampfer 16, wobei das verdampfte erste Kühlmittel 18 über die Abführleitung 38 gasförmig zurück zu dem thermischen Zwischenspeicher 10 strömt.

Die Menge des ersten Kühlmittels 18, welches in dem thermischen Zwischenspeicher 10 und in dem zweiten Verdampfer 16 aufgenommen ist, ist in Fig. 1 nur beispielhaft dargestellt und stellt nicht die zwingend erforderlichen Größenverhältnisse dar. Da in der Regel in dem thermischen Zwischenspeicher 10 eine größere Menge an dem ersten Kühlmittel 18, vor allem in flüssiger Form, aufgenommen ist, herrschen in dem thermischen Zwischenspeicher andere Drücke und andere Temperaturen als in dem zweiten Verdampfer 16.

Dadurch kann der Prozess der stromlosen Kühlung, in Abhängigkeit der Dimensionierung des thermischen Zwischenspeichers 10 und des zweiten Verdampfers 16 bzw. der bevorrateten Menge des ersten flüssigen Kühlmittels 18, für relativ lange Zeit aufrechterhalten werden. Zudem ist kein Antrieb oder keine Einrichtung zum Umwälzen des ersten Kühlmittels 18 erforderlich, wie dies in den entsprechenden Vorrichtungen aus dem Stand der Technik zwingend benötigt wird. Weiterhin ist ebenfalls ein geräuscharmer Kühlbetrieb realisierbar.

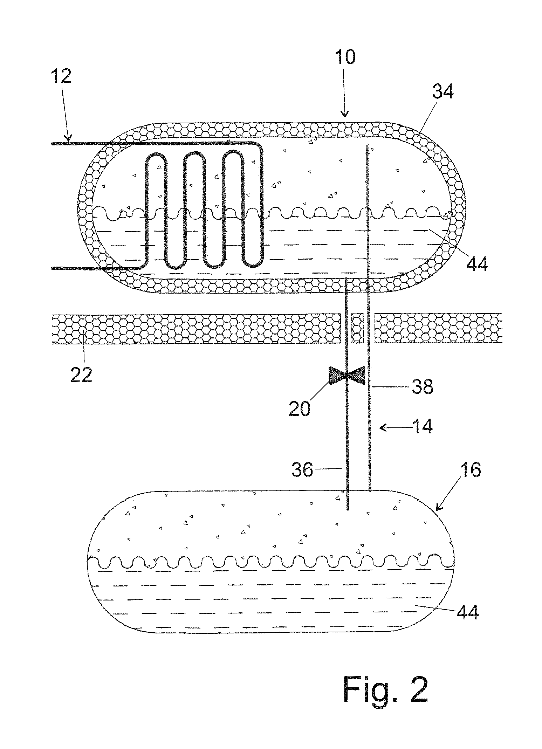

Fig. 2 zeigt eine schematische Ansicht einer weiteren Ausführungsvariante, welche im Wesentlichen dem in Fig. 1 dargestellten Prinzip entspricht. Jedoch ist bei dem in Fig. 2 dargestellten thermischen Zwischenspeicher 10 das erste Leitungssystem 12 geschlossen ausgebildet, wodurch der thermische Zwischenspeicher 10 ohne direkten Kontakt, das heißt Stoffaustausch, mit dem im ersten Leitungssystem 12 zirkulierenden ersten Kühlmittel gekühlt wird. Ferner ist in dem zweiten Leitungssystem 14 ein zweites Kühlmittel 44 aufgenommen, welches vom thermischen Zwischenspeicher 10 zum zweiten Verdampfer 16 zirkuliert. Ansonsten erfolgt bei einem Stromausfall eine geräuscharme Kühlung des begehbaren Raums in entsprechender Weise, wie bereits für Fig. 1 dargestellt.

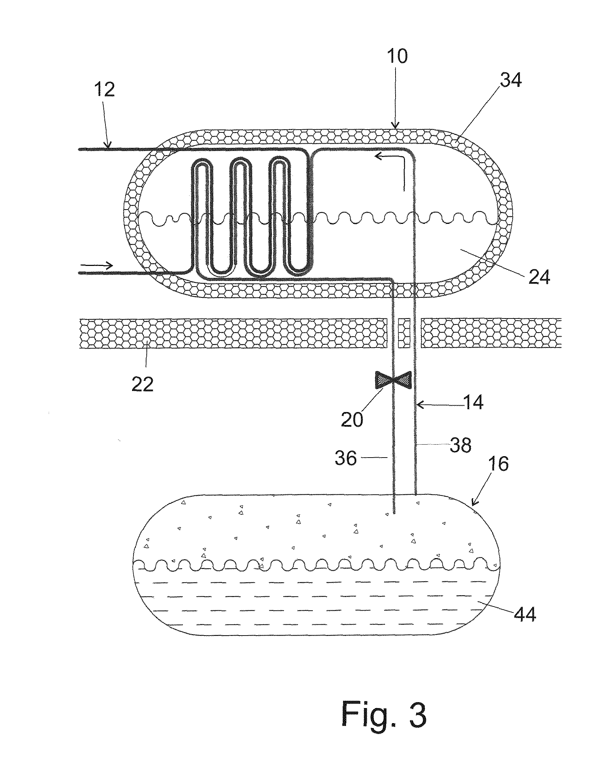

Fig. 3 zeigt eine weitere Ausführung einer Kühleinrichtung mit einem thermischen Zwischenspeicher 10, wobei auch das zweite Leitungssystem 14 in sich geschlossen ausgebildet ist. Dabei ist in dem ersten Leitungssystem 12 das erste Kühlmittel aufgenommen und in dem zweiten Leitungssystem 14 ist das zweite Kühlmittel 44 geführt. Zur Kühlung des zweiten Kühlmittels 44 bzw. zur Wärmeübertragung des ersten Kühlmittels ist in dem thermischen Zwischenspeicher 10 ein Speichermedium 24 aufgenommen. Das Speichermedium 24 dient zur Wärmeübertragung der Wärme des zweiten Kühlmittels 44 aus dem zweiten Leitungssystem 14 an das erste Kühlmittel des ersten Leitungssystems 12. Die Wärme von dem zweiten Kühlmittel 44 wird an das Speichermedium 24 übertragen und in dem Speichermedium 24 gespeichert, z.B. durch den Phasenwechsel eines Phasenwechselmaterials, und anschließend kann die in dem Phasenwechselmaterial gespeicherte thermische Energie (Wärme bzw. "Kälte") an das erste Kühlmittel übertragen werden.

Das Speichermedium 24 ist dabei vorzugsweise ein Phasenwechselmaterial, das beispielsweise ein Gemisch aus Wasser mit Salzen oder Alkoholen sein kann. Das Speichermedium 24 ist nur in dem thermischen Zwischenspeicher 10 aufgenommen und wird nicht wie bei den in den Fig. 1 und 2 gezeigten thermischen Zwischenspeicher 10 umgewälzt. Die Kühlung des begehbaren Raums erfolgt analog zu den in den Fig. 1 und 2 beschriebenen Abläufen. Daher wird bei einem Stromausfall das zweite Kühlmittel 44 über das zweite Leitungssystem 14 schwerkraftbedingt umgewälzt und eine geräuscharme Kühlung realisiert.

Das in dem zweiten Leitungssystem 14 aufgenommene zweite Kühlmittel 44 wird über das Speichermedium 24 gekühlt und fließt schwerkraftbedingt über die Zuführleitung 36 und das geöffnete Ventil 20 zu dem zweiten Verdampfer 16, in welchem das zweite Kühlmittel 44 verdampft. Das verdampfte, gasförmige zweite Kühlmittel 44 wird dann über die Abführleitung 38 zurück in den thermischen Zwischenspeicher 10 geführt, wobei durch die Führung des in dem thermischen Zwischenspeicher 10 aufgenommenen Teils des ersten Leitungssystems 12 durch das Speichermedium 24 das erste Kühlmittel Wärme aufnimmt.

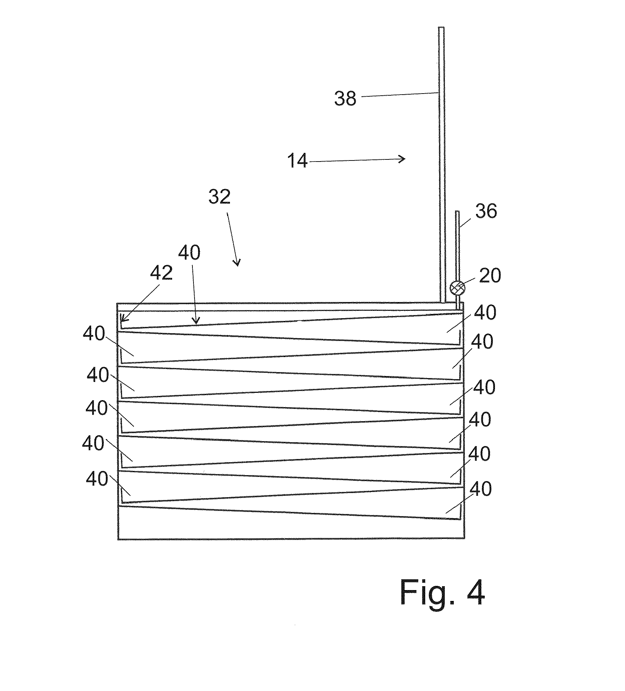

Fig. 4 zeigt eine vorteilhafte Ausführungsvariante des zweiten Verdampfers 16 gemäß Fig. 1-3, in einem Leitungssystem 14, welches über ein Ventil 20 mit einem Flächenverdampfer 32 verbunden ist. Der Flächenverdampfer 32 weist in seinem Inneren eine Vielzahl von Traversen 40 mit einem Überlauf 42 auf, in welchen sich das Kühlmittel, das in flüssiger Form über die Zuführleitung 36 und das Ventil 20 in den Flächenverdampfer 32 strömt, sammelt. Dadurch weist der Flächenverdampfer 32 eine relativ große Wärmeübertragungsfläche zum Verdampfen des Kühlmittels auf, so dass im Gegensatz zu einem vollständig gefluteten Verdampfer auch bei geringeren Mengen des Kühlmittels eine hohe Kühlleistung erzielt wird. Das verdampfte Kühlmittel kann dann über die Abführleitung 38 wieder gasförmig zurück zu dem thermischen Zwischenspeicher strömen, wo das Kühlmittel einem Phasenwechsel unterworfen wird und in flüssiger Form nach dem Phasenwechsel erneut in den Flächenverdampfer 32 strömen kann.

Selbstverständlich können bei der Kühleinrichtung auch andere Ausführungen eines zweiten Verdampfers, anstelle des zweiten Verdampfers 16 oder des Flächenverdampfers 32, verwendet werden.

### Bezugszeichenliste

- 10: thermischer Zwischenspeicher
- 12: erstes Leitungssystem
- 14: zweites Leitungssystem
- 16: zweiter Verdampfer
- 18: erstes Kühlmittel
- 20: Ventil
- 22: Decke
- 24: Speichermedium
- 32: Flächenverdampfer
- 34: Wand
- 36: Zuführleitung
- 38: Abführleitung
- 40: Traverse
- 42: Überlauf
- 44: zweites Kühlmittel

## Patentansprüche

1. Kühleinrichtung für einen zeitweise stromlosen Kühlbetrieb für einen zu kühlenden, begehbaren Raum, aufweisend eine Kältemaschine zum Kühlen eines Kühlmittels mit einem ersten Verdampfer zum Verdampfen eines Kühlmittels und einen thermischen Zwischenspeicher (10) mit einem zweiten Verdampfer (16; 32) zum Verdampfen eines Kühlmittels, wobei
- der erste Verdampfer der Kältemaschine über ein erstes Leitungssystem (12) mit dem thermischen Zwischenspeicher (10) und der thermische Zwischenspeicher (10) über ein von dem ersten Leitungssystem (12) getrenntes zweites Leitungssystem (14) mit dem zweiten Verdampfer (16; 32) verbunden ist,
- ein erstes Kühlmittel (18) von der Kältemaschine gekühlt wird und über das erste Leitungssystem (12) dem Zwischenspeicher (10) zuführbar ist, wobei das erste Kühlmittel (18) über eine Leitung (36) des zweiten Leitungssystems (14) dem zweiten Verdampfer (16; 32) zuführbar ist und das in dem zweiten Verdampfer (16; 32) verdampfte erste Kühlmittel (18) über eine weitere Leitung (38) des zweiten Leitungssystems (14) dem Zwischenspeicher (10) zuführbar ist,
- der erste Verdampfer des ersten Leitungssystems (12) und der thermische Zwischenspeicher (10) über dem zu kühlenden, begehbaren Raum und der zweite Verdampfer (16; 32) in dem zu kühlenden, begehbaren Raum angeordnet sind, wobei der erste Verdampfer des ersten Leitungssystems (12) und der thermische Zwischenspeicher (10) über dem zweiten Verdampfer (16; 32) angeordnet sind, so dass das erste Kühlmittel (18) in der Leitung (36) des zweiten Leitungssystems (14) schwerkraftbedingt zu dem zweiten Verdampfer (16; 32) strömen und das in dem zweiten Verdampfer (16; 32) verdampfte erste Kühlmittel (18) über die Leitung (38) des zweiten Leitungssystems (14) zu dem thermischen Zwischenspeicher (10) zurückströmen kann, wobei in der Leitung (36) des zweiten Leitungssystems (14) zu dem zweiten Verdampfer (16; 32) ein Ventil (20) angeordnet ist, über welches die Menge des ersten Kühlmittels (18), das zu dem zweiten Verdampfer (16; 32) strömt, einstellbar ist.

2. Kühleinrichtung nach Anspruch 1, wobei das erste Leitungssystem (12) in sich geschlossen ist und einen separaten Kreislauf für ein zweites Kühlmittel (44) bildet, welches in dem zweiten Leitungssystem (14) von dem thermischen Zwischenspeicher (10) zum zweiten Verdampfer (16; 32) fließt, und ein Teil des ersten Leitungssystems (12) innerhalb des thermischen Zwischenspeichers (10) verläuft.

3. Kühleinrichtung nach Anspruch 2, wobei das zweite Leitungssystem (14) in sich geschlossen ist und einen separaten Kreislauf für das zweite Kühlmittel (44) bildet, welches von dem thermischen Zwischenspeicher (10) zu dem zweiten Verdampfer (16; 32) und von dem zweiten Verdampfer (16; 32) zu dem thermischen Zwischenspeicher (10) strömt, wobei in dem thermischen Zwischenspeicher (10) ein Speichermedium (24) aufgenommen ist und ein Teil des zweiten Leitungssystems (14) innerhalb des thermischen Zwischenspeichers (10) verläuft.

4. Kühleinrichtung nach Anspruch 3, wobei das erste und das zweite Leitungssystem (12; 14) in dem thermischen Zwischenspeicher (10) im Wesentlichen aneinander verlaufen und die Strömungsrichtung des zweiten Kühlmittels (44) und die Strömungsrichtung des ersten Kühlmittels (18) so eingestellt sind, dass die Strömungsrichtung des ersten Kühlmittels (18) entgegen der Strömungsrichtung des zweiten Kühlmittels (44) läuft.

5. Kühleinrichtung nach einem der Ansprüche 1 bis 4, wobei das Ventil (20) in der Leitung (36) des zweiten Leitungssystems (14) zu dem zweiten Verdampfer (16; 32) im unbetätigten Zustand geöffnet ist oder der Öffnungszustand des Ventils (20) thermostatisch regelbar ist.

6. Kühleinrichtung nach einem der Ansprüche 1 bis 5, wobei der thermische Zwischenspeicher (10) gegenüber seiner Umgebung hermetisch isoliert ist.

7. Kühleinrichtung nach einem der Ansprüche 1 bis 6, wobei das Speichermedium (24) ein Phasenwechselmaterial ist.

8. Kühleinrichtung nach einem der Ansprüche 1 bis 7, wobei der zweite Verdampfer als Flächenverdampfer (32) ausgebildet ist.

9. Kühleinrichtung nach Anspruch 8, wobei der Flächenverdampfer (32) eine Vielzahl von Traversen (40) und einen Einlassanschluss für flüssiges Kühlmittel aufweist, wobei die Traversen (40) schräg von einer Seite des Flächenverdampfers (32) zu der gegenüberliegenden Seite des Flächenverdampfers (32) verlaufen und wobei die Traversen (40) an ihren unteren Endabschnitten so ausgebildet sind, dass sie einen Überlauf (42) für das in dem Flächenverdampfer (32) einströmende und die Traversen (40) herabströmende Kühlmittel aufweisen, wobei die Abstände der Traversen (40) zueinander und zu den Wänden des Flächenverdampfers (32) so groß sind, dass verdampftes Kühlmittel zu einem Auslassanschluss strömen kann.

10. Kühleinrichtung nach einem der Ansprüche 7 bis 9, wobei das Phasenwechselmaterial ein Gemisch aus Wasser und Salzen oder Alkoholen mit oder ohne weitere Zusätze ist.

11. Kühleinrichtung nach Anspruch 10, wobei die Gemischzusammensetzung und/oder Gemischkonzentration der Gemische aus Wasser und Salzen oder Alkoholen über weitere Mittel einstellbar und/oder veränderbar ist.

12. Kühleinrichtung nach einem der Ansprüche 1 bis 11, wobei die Teile des ersten und/oder des zweiten Leitungssystems (12; 14), die innerhalb des thermischen Zwischenspeichers (10) verlaufen, schrauben- oder mäanderförmig ausgebildet sind und entlang der Wand (34) des thermischen Zwischenspeichers (10) verlaufen.

13. Kühleinrichtung nach Anspruch 12, wobei der in dem thermischen Zwischenspeicher (10) angeordnete Teil des ersten Leitungssystems (12) und der in dem thermischen Zwischenspeicher (10) angeordnete Teil des zweiten Leitungssystems (14) aneinander liegen.

14. Kühleinrichtung nach einem der Ansprüche 1 bis 13, wobei in dem ersten Leitungssystem (12) und in dem zweiten Leitungssystem (14) Umschaltmittel angeordnet sind, die einen direkten Fluss des ersten (18) oder zweiten Kühlmittels (44) von der Kältemaschine zu dem zweiten Verdampfer (16; 32) bereitstellen.
